# EUROPÄISCHE PATENTANMELDUNG

(11) **EP 4 563 441 A1**
(43) Veröffentlichungstag der Anmeldung: **04.06.2025**
(21) Anmeldenummer: 24207906.9
(22) Anmeldetag: 21.10.2024
(51) Int. Cl.: B62B 3/14

(54) **STAPELBARER EINKAUFSWAGEN MIT EINER WIEGEEINHEIT**

(30) Priorität: 30.11.2023 DE 202023107105 U
(71) Anmelder: J.D. Geck GmbH, 58752 Altena (DE)
(72) Erfinder: Kroker, Thomas, 58513 Lüdenscheid (DE)
(74) Vertreter: Tarvenkorn, Oliver

(57) **Zusammenfassung**

Stapelbarer Einkaufswagen (100) mit einer Wiegeeinheit (140), wenigstens umfassend
- ein Fahrgestell (120), das zwei Paare von nach vorn und/oder nach hinten abgespreizten und jeweils mit wenigstens einer Rolle (123) versehenen Stützen (121, 122) umfasst, die sich paarweise an einem oberen Scheitel (124) vereinigen,
- die Wiegeeinheit (140), die zumindest eine elektronischen Auswertungseinrichtung und wenigstens zwei Wiegezellen (141, 142) umfasst;
- eine Einkaufsartikelaufnahmeeinheit (130), die über die darunter angeordneten Wiegezellen (141, 142) auf dem Fahrgestell (120) gelagert ist,
dadurch gekennzeichnet, dass am Heck des Einkaufswagens eine faltbare Warenablage vorgesehen ist, die nur an der Einkaufsartikelaufnahmeeinheit (130) hängt, ohne das Fahrgestell (120) zu berühren.

## Beschreibung

Die Erfindung betrifft einen stapelbaren Einkaufswagen mit einer Wiegeeinheit, mit den Merkmalen des Oberbegriffs des Anspruchs 1.

Ein Einkaufswagen üblicher Bauart ohne Bodenablage ist aus der DE 20 2009 011 480 U1 bekannt. Die abgespreizten Stützen des sogenannten S-Fahrgestells, an deren Ende jeweils eine Rolle gelagert ist, erfordern keinen tief liegenden Bodenrahmen, so dass z. B. die Gefahr des Anstoßens von Personen im Knöchelbereich reduziert ist.

EP 2 439 125 A2 beschreibt ein stapelbares Fahrgestell für einen solchen Einkaufswagen, sieht aber keine Wiegeeinheit vor.

Aus EP 2 335 998 A2 ist eine faltbare Warenablage für einen Einkaufswagen ohne Bodenablage bekannt. Durch die Formgebung der beiden gelenkig miteinander verbundenen Teilelemente ist eine einfache Montage der jeweils zuvor mit Korrosionsschutz vorbehandelten Teilelemente möglich, so dass eine lückenlose Korrosionsschutzbeschichtung ohne Nachbehandlung erreicht wird. Auch hier ist keine Wiegeeinheit vorgesehen.

Ein Einkaufswagen mit einer Wiegeeinheit ist aus der DE 10 2018 132 059 A1 bekannt. Dieser besitzt eine Einkaufsartikelaufnahmeeinheit mit einem Korb als oberem Teil und einer Bodenablage als unterem Teil. Die gesamte Einkaufsartikelaufnahmeeinheit ist über drei Wiegezellen schwimmend auf dem Bodenrahmen des Fahrgestells gelagert. Dieses Prinzip ist nicht ohne weiteres auf einen Einkaufswagen mit einem S-Fahrgestell mit abgespreizten Stützen und ohne Bodenablage übertragbar, da unterhalb des Korbs kein Rahmen zur Verfügung steht, auf dem die Wiegezellen angeordnet werden können. Eine Ergänzung eines solchen Rahmens ist auch nicht möglich, da ansonsten die Stapelbarkeit des Einkaufswagen nicht mehr gegeben oder zumindest eingeschränkt wäre.

Allen bekannten stapelbaren Einkaufswagen mit einer Wiegeeinheit ist gemeinsam, dass sie keine faltbare Warenablage aufweisen können, welche bei herkömmlichen Einkaufswagen im Heckbereich als Zubehör vorgesehen sein kann, damit Kunden trotz fehlender Bodenablage eine Getränkekiste oder einen andere schweren und/oder sperrigen Gegenstand mitnehmen können, ohne das Volumen des Drahtkorbs dafür nutzen zu müssen.

Die Aufgabe der Erfindung besteht somit darin, einen stapelbaren Einkaufswagen mit einer Wiegeeinheit für ein Fahrgestell mit abgespreizten Stützen, die nicht über einen Bodenrahmen verbunden sind, ein sogenanntes S-Fahrgestell, so anzupassen, dass auch eine faltbare Warenablage vorgesehen sein kann. Bei mehreren ineinander gestapelten Einkaufswagen soll ein kleines Stapelmaß erhalten bleiben.

Diese Aufgabe wird durch einen Einkaufswagen mit einer Wiegeeinheit mit den Merkmalen des Anspruchs 1 gelöst.

Die Wiegezellen sind oben an einem Scheitel am Fahrgestell angeordnet. Dort sind die Stützen zusammengeführt, die die Rollen tragen, wobei insbesondere zwei Seitenteile mit je einer vorderen und einer hinteren Stütze zusammengeführt sind. Der Korb, insbesondere Drahtkorb, der den wichtigsten Teil der Einkaufsartikelaufnahmeeinheit bildet, ist vollständig oberhalb des Fahrgestells angeordnet und über die wenigstens zwei, insbesondere drei Wiegezellen auf dem Fahrgestell gelagert. Um eine Gewichtserfassung auch mit einer faltbaren Warenablage zu ermöglichen, sieht die Erfindung eine faltbare Warenablage vor, die nur an der Einkaufsartikelaufnahmeeinheit hängend befestigt ist, ohne jedoch das Fahrgestell zu berühren.

Der von der Einkaufsartikelaufnahmeeinheit herabhängende Teil bildet also eine Einheit, die sich über die durch die Wiegezellen gebildete Auflageebene an der Oberseite des Fahrgestells hinweg nach unten erstreckt. Ein wesentlicher Vorteil der Erfindung ist, dass keine gesonderte Wiegeeinheit für die Warenablage erforderlich ist. Die Lagerung der oben liegenden Einkaufsartikelaufnahmeeinheit auf vorzugsweise drei Wiegezellen muss nicht verändert werden. Es sind auch keine zusätzlichen Wiegezellen erforderlich. Der zweite Vorteil besteht darin, dass aufgrund der Durchquerung der Auflageebene durch Teile der Warenablage diese so tief wie von herkömmlichen Einkaufswagen gewohnt angebracht werden kann, nämlich nur wenig oberhalb des Bereichs der Rollen. Dadurch muss ein Benutzer die Last nicht hochstemmen, um sie irgendwo weiter oben am Einkaufswagen zu platzieren, sondern kann sie bequem auf Kniehöhe oder sogar darunter platzieren

Um die Warenablage tief in der Nähe des Fahrgestells, aber ohne Berührung zu dem Fahrgestell, platzieren zu können, sind vorzugsweise beidseitig Tragelemente vorgesehen, die sich seitlich außen von der Einkaufsartikelaufnahmeeinheit aus nach unten erstrecken, wobei unten an den Tragelementen je ein Schwenklager für die Warenablage ausgebildet ist.

Die Warenablage selbst ist insbesondere durch wenigstens zwei Teilelemente gebildet, die an einer gemeinsamen Schwenkachse gelenkig miteinander verbunden sind. Diese Schwenkachse kann während des Ein- und Ausfaltens ihre Lage verändern. Jedes der Teilelemente ist für sich außerdem jeweils über eine weitere Schwenkachse beweglich an der Einkaufsartikelaufnahmeeinheit gelagert, wobei eine obere Schwenkachse in Fahrtrichtung des Fahrgestells weiter vorn liegt als eine untere Schwenkachse, welche bevorzugt in den Endpunkten der Tragelemente gelagert ist.

Die obere, vordere Schwenkachse des vorderen Teilelements ist bevorzugt direkt im Bodenbereich der Einkaufsartikelaufnahmeeinheit angeordnet. Die Verbindung des Teilelements dazu kann dadurch hergestellt werden, dass das vordere Teilelement wenigstens zwei zueinander beabstandete Haken aufweist und dass eine Basiseinheit mit dem Bodenbereich der Einkaufsartikelaufnahmeeinheit verbunden ist, die einen vom Bodenbereich beabstandeten, horizontal ausgerichteten Drahtbügel aufweist. Dieser bildet die Schwenkachse, sobald die Haken des vorderen Teilelements daran eingehängt sind.

Die Basiseinheit kann um eine Befestigung der beidseitig vorhandenen Tragelemente ergänzt werden. Die Tragelemente erstrecken sich von der Verbindung mit dem Basiselement im Bodenbereich der Einkaufsartikelaufnahmeeinheit vorzugsweise zunächst in einem Vertikalabschnitt bis unterhalb der hinteren Wiegezellen, dann in einem Horizontalabschnitt seitlich bis auf Höhe der hinteren Stützen nach außen und von dort schließlich schräg nach unten zu den Schwenklagern. Damit werden die Tragelemente in einem Doppelwinkel nach außen geführt, so dass einerseits das Fahrgestell nicht berührt wird und andererseits der Stapelraum zwischen den Stützen des Fahrgestells frei bleibt.

Da bei Einkaufswagen viele tragende Teile üblicherweise aus Stahldraht gebildet werden, ist es auch bei dem Einkaufswagen der Erfindung vorteilhaft, die Tragelemente zumindest in einem zu den Schwenklagern führenden und außerhalb der Fahrgestell-Stützen verlaufenden Endabschnitt als DoppelDrahtbügel auszubilden. Der Drahtbügel umfasst zwei beabstandet parallel zueinander verlaufende Teilabschnitte, welche sich an den endseitigen Schwenklagern in einem Bogen vereinigen. Der insbesondere verzinkte Doppeldrahtbügel bietet hohe Stabilität, einfache Verarbeitbarkeit und guten Korrosionsschutz, da große Außenflächen ebenso vermieden werden wie Hohlstrukturen, in denen sich Feuchtigkeit sammeln kann.

Bei einer bevorzugten Ausführungsform ist vorgesehen, dass die Endabschnitte der Tragelemente im Grundriss des Einkaufswagens gesehen jeweils unterhalb der hinteren Stützen des Fahrgestells verlaufen, so dass der zum Stapeln benötigte Innenraum des Fahrgestells zwischen den Stützen frei bleibt. Dabei sollten sie sich vorzugsweise parallel zu den hinteren Stützen des Fahrgestells erstrecken, damit die an ihrem Ende angeordnet Schwenklager so weit wie möglich hinten und unten positioniert sind. Durch den horizontalen und vertikalen Abstand der Schwenklager am unteren Ende der Tragelemente zum weiteren Schwenklager im Bodenbereich der Einkaufsartikelaufnahmeeinheit ergibt sich die Länge und Neigung der zum Aufsetzen von Getränkekisten u. ä. zur Verfügung stehenden Fläche. Der Abstand innen zwischen den Tragelementen bestimmt die maximale Breite davon.

Durch die von der Einkaufsartikelaufnahmeeinheit aus weit nach hinten ausladende Warenablage ergibt sich ein starkes Moment in Bezug auf die Auflager der Einkaufsartikelaufnahmeeinheit auf dem Fahrgestell. Deshalb müssen die Wiegezellen so ausgewählt sein, dass wenigstens je eine auf Druck belastbare Wiegezelle in einem rückwärtigen Bereich der Einkaufsartikelaufnahmeeinheit vorgesehen ist und dass eine vordere Wiegezelle am Fahrgestell befestigt ist, die auf Druck, aber auch auf Zug belastbar ist.

Die Ausbildung der Teilelemente kann auch nach der Erfindung grundsätzlich so vorgenommen werden, wie sie aus EP 2 335 998 A2 bekannt ist und sich bewährt hat. Die Führungsbahnen, in denen die gemeinsame, imaginäre Schwenkachse wandern kann, sind insbesondere an den vorderen, mit der Einkaufsartikelaufnahmeeinheit zu verbindenden Teilelementen ausgebildet. Die Buchten, die sich an die Führungsbahnen anschließen, liegen in einer Ebene, die senkrecht zu den beiden Ebenen ist, welche jeweils durch die parallelen Drahtbügel an der Führungsbahn laufen. In einer Draufsicht gesehen bilden die beiden Buchten, die am Anfang der Führungsbahn angeordnet sind, somit eine Einfädelstelle in die jeweilige Führungsbahn. An dem anderen Teilelement des Getränkekistenhalters sind zwei parallele L-förmige Bügelstücke vorhanden. Diese besitzen endseitig sogenannte Bügelfortsätze, also kurze umgebogene Enden, die vorzugsweise nach innen weisen, also aufeinander zu. Mit diesen umgebogenen Enden wird das hintere Teilelement des Getränkekistenhalters einfach von oben an dem durch die Buchten gebildeten Rücksprung am vorderen Teilelement positioniert und dadurch in die Führungsbahnen eingefädelt. Diese einfache Steckverbindung ermöglicht, dass beide Teile der Warenablage zunächst einzeln hergestellt und mit einem Korrosionsschutzüberzug versehen werden können, der somit lückenlos aufgebracht werden kann.

Die Erfindung wird nachfolgend mit Bezug auf das in den Zeichnungen dargestellte Ausführungsbeispiel näher erläutert. Die Figuren zeigen im Einzelnen:
- Fig. 1: einen Einkaufswagen in perspektivischer Ansicht von schräg hinten,
- Fig. 2: eine perspektivische Ansicht von schräg unten auf einen hinteren Bereich des Einkaufswagens;
- Fig. 3 bis 6: den Einkaufswagen mit verschiedenen Stellungen der Warenablage, jeweils in einer seitlichen Schnittansicht von rechts;
- Fig. 7: eine Ansicht des Einkaufswagens von hinten;
- Fig. 8 bis 10: einen Stapelvorgang mit mehreren Einkaufswagen in seitlicher Ansicht;
- Fig. 11A: einen Stapel mit mehreren Einkaufswagen in perspektivischer Ansicht von schräg vorn und
- Fig. 11B: ein vergrößerter Ausschnitt der Darstellung in Figur 11A

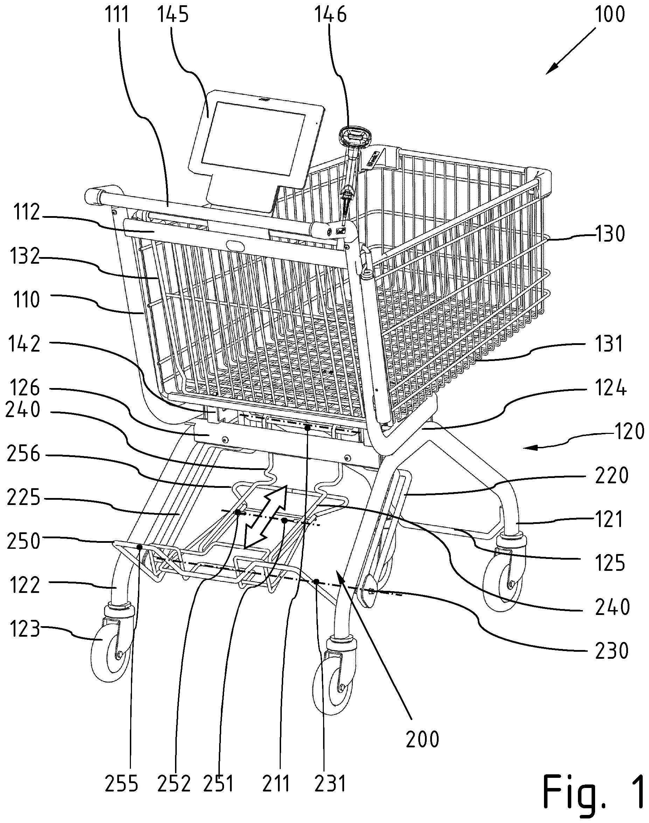

Figur 1 zeigt in perspektivischer Ansicht von hinten einen Einkaufswagen 100 ohne Bodenablage, der ein sogenanntes S-Fahrgestell 120 umfasst. Auf dem Fahrgestell 120 ist eine Einkaufsartikelaufnahmeeinheit 130 aufgesetzt, die im dargestellten Ausführungsbeispiel als Drahtkorb ausgebildet ist.

Der Einkaufswagen 100 ist dazu ausgebildet und vorgesehen, das Gewicht der in die Einkaufsartikelaufnahmeeinheit 130 eingelegten Waren zu erfassen und zu überprüfen, wozu einerseits der Kunde mit einem Handscanner 146 die Waren scannt und zum anderen eine Wiegeeinheit das Gewicht der eingelegten Waren mit dem in einem Datenspeicher hinterlegten Standardgewicht des eingescannten Artikels abgleicht. Auf einem Display 145 werden die erfassten Artikel angezeigt und dem Kunden weitere Hinweise gegeben. Das Display 145 ist Teil einer Auswertungseinheit, an die mehrere Wiegezellen 142 und der Handscanner 146 angeschlossen sind.

Das Fahrgestell 120 ist fest mit einem Griffbügelträger 110 verbunden, an dessen Oberseite eine Querstange als Griffbügel 111 gehalten ist. Das Fahrgestell 120 umfasst zwei vordere Stützen 121, die jeweils eine beweglich gelagerte Pendelrolle 123 tragen und zwei hintere Stützen 122, an deren Ende ebenfalls jeweils eine Pendelrolle 123 gelagert ist. Je eine vordere und hintere Stütze 121,122 vereinigen sich an einem oberen Scheitel 124, an dem auch der Griffbügelträger 110 befestigt ist.

Um die Gewichtserfassung der Waren durchführen zu können, ist die Einkaufsartikelaufnahmeeinheit 130 vollständig von dem Griffbügelträger 110 und dem Fahrgestell 120 entkoppelt. Im Bereich des Scheitels 124 ist rechts und links im hinteren Bereich jeweils eine Wiegezelle 142 angeordnet, die sich mit ihrer Längsachse in Fahrtrichtung des Fahrgestells 120 erstreckt. Nicht sichtbar in Figur 1 ist eine weitere, vordere Wiegezelle, die quer unter dem Bodenbereich 131 der Einkaufsartikelaufnahmeeinheit 130 angeordnet ist. Die Einkaufsartikelaufnahmeeinheit 130 besitzt an ihrer Rückseite eine pendelnd aufgehängte Korbklappe 132.

Um beim Stapeln von mehreren Einkaufswagen 100 ineinander eine Beschädigung der Wiegezellen 142 durch Stöße zu vermeiden, sind daran Schutzelemente vorgesehen. Zum einen sind die Wiegezellen 142 jeweils selbst in U-förmigen Metallprofilen geschützt aufgenommen. Weiterhin besitzt das Fahrgestell 120 einen rückwärtigen Schutzbügel 126, der sich auf Höhe des Scheitels 124 zwischen den hinteren Stützen 122 erstreckt und Stöße abfängt, die möglicherweise beim Anprall eines von hinten eingeschobenen weiteren Einkaufswagens entstehen. Oben am Griffbügelträger 110 befindet sich ein weiterer Schutzbügel 112, der genau auf Höhe einer Schwenkachse der beweglich aufgehängten Korbklappe 132 angeordnet ist. Schließlich ist im unteren Bereich des Fahrgestells 120, also am unteren Ende der vorderen Stützen 121, ein weiterer Querbügel 125 eingefügt, der dazu dient, die beiden vorderen Stützen121 gegeneinander abzustützen, die deutlich weiter nach in Längsrichtung ausladen als die hinteren Stützen122 und damit die Steifigkeit des Fahrgestells 120 zu erhöhen.

Der Einkaufswagen 100 nach der Erfindung umfasst außerdem eine faltbare Warenablage 200. Um auch von Getränkekisten und anderen Waren, die im Bereich der Warenablage 200 aufgelegt sind, das Gewicht zuverlässig erfassen zu können, ist die gesamte Warenablage 200 hängend mit dem Bodenbereich 131 der Einkaufsartikelaufnahmeeinheit 130 verbunden. Die Warenablage 200 berührt weder in dem in Figur 1 dargestellten, ausgefalteten Zustand, noch im eingefalteten Zustand das Fahrgestell 120 oder den Griffbügelträger 110.

Bei dem dargestellten Ausführungsbeispiel ist die Warenablage 200, die aus einem vorderen Teilelement 240 und einem beweglich damit verbundenen, hinteren Teilelement 250 besteht, an einer oberen und in Fahrtrichtung vorn liegenden Schwenkachse aufgehängt, die sich unmittelbar unter dem Bodenbereich 131 der Einkaufsartikelaufnahmeeinheit 130 befindet.

Außerdem ist über zwei Schwenklager 230 eine weitere, untere Schwenkachse 231 ausgebildet, die vom Fahrgestell 120 entkoppelt ist. Dazu sind an beiden Seiten Tragelemente 220 vorgesehen, von denen in Figur 1 nur ein als Doppeldrahtbügel ausgebildete Endabschnitt sichtbar ist, an dessen unteren Ende jeweils ein Schwenklager 230 angeordnet ist. Die beiden Teilelemente 240, 250 sind dadurch miteinander verbunden, dass eine Führung zwischen ihnen ausgebildet ist, entlang der eine gemeinsame Schwenkachse 251 wandern kann. Im ausgefalteten Zustand legen sich Abschnitte des vorderen Teilelements 240, die sich geradlinig nach vorn erstrecken, auf die mit einer bogenförmigen Bucht 256 versehenen vorderen Abschnitte des hinteren Teilelements 250 und bilden miteinander eine stabile Auflage aus. Die Buchten 256 dienen während der Montage außerdem der Durchführung von Bügelfortsätzen 252 am anderen Teilelement 250.

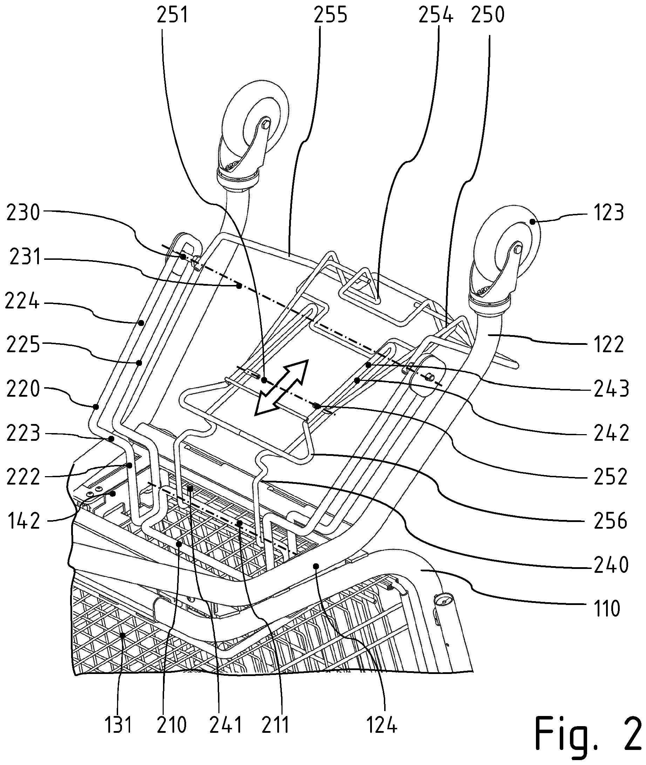

Figur 2 zeigt eine perspektivische Ansicht von schräg unten auf den hinteren Bereich des Einkaufswagens 100 mit der faltbaren Warenablage 200. Sichtbar ist hier, dass eine Basiseinheit 210, die aus einem Drahtbügel gefertigt ist, direkt mit dem Bodenbereich 131 der Einkaufsartikelaufnahmeeinheit 130 verbunden ist. Die Basiseinheit 210 weist eine Schwenkachse 211 auf, die durch einen Drahtabschnitt gebildet ist, der sich horizontal und mit Abstand zum Bodenbereich 131 erstreckt. Haken 241 an der vorderen Seite des vorderen Teilelements 240 sind in die derartig ausgebildete Schwenkachse 211 eingehakt.

Weiterhin ist in Figur 2 die Gestaltung der seitlichen Tragelemente 220 gut erkennbar. Die Tragelemente 220 umfassen hier drei wesentliche Abschnitte, nämlich einen Vertikalabschnitt 222, der sich so weit vom Bodenbereich 131 aus zur Aufstandsebene nach unten erstreckt, dass ein sich rechtwinklig daran anschließender, horizontaler Abschnitt 223 unterhalb der Wiegezellen 142 verläuft. Mit einem weiteren rechtwinkligen Knick schließt sich ein weiterer Abschnitt an, der durch parallel geführte Teilabschnitte 224, 225 gebildet ist, welche sich beide parallel zu der hinteren Stütze 122 erstrecken und an ihrem jeweiligen Ende in einem Bogen vereinigt sind. Im Bereich der Vereinigungsstelle ist das Schwenklager 230 ausgebildet. Die beiden sich gegenüberliegenden Schenklager 230 der beiden Tragelemente bilden zusammen die Schwenkachse 231 für das hintere, untere Teilelement 250.

Am vorderen Teilelement 240 sind Drahtschlaufen 243 ausgebildet, die hochkant ausgerichtet sind und parallel zueinander verlaufen. In ihnen ist jeweils eine Führungsbahn 242 ausgebildet. Bügelfortsätze 252 des hinteren Teilelements 252 greifen beidseitig in die Führungsbahn 242 ein und bilden die gemeinsame Schwenkachse 251 der beiden Teilelemente 240, 250. Wie durch den Blockpfeil angedeutet, kann die Schwenkachse 251 entlang der Führungsbahn 242 wandern.

Am hinteren Teilelement 250 sind im rückwärtigen Bereich Aufkantungen 254 gebildet, die verhindern, dass eine Getränkekiste von der schrägen Aufsatzebene der Warenablage 200 abrutscht. Zwischen den Aufkantungen 254 und den seitlichen äußeren Abschnitten, die zu den jeweiligen Schwenklagern führen, ist jeweils ein Gleitstangenabschnitt 255 ausgebildet, dessen Funktion im weiteren Verlauf noch erläutert werden wird.

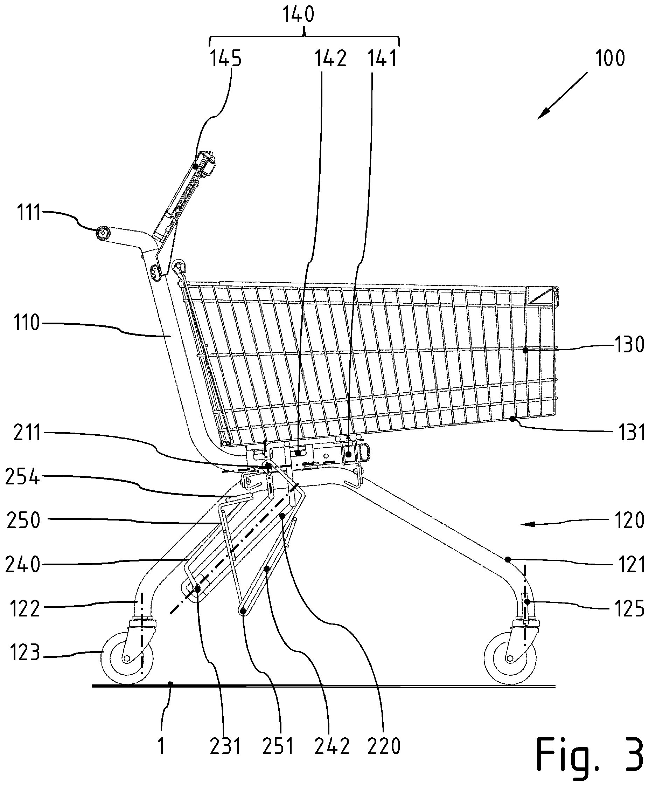

Figur 3 bis 6 zeigen jeweils den Einkaufswagen 100 in einer seitlichen Ansicht von rechts mit verschiedenen Stellungen der Warenablage, wobei auch die jeweilige Lage der drei Schwenkachsen 211, 231, 251 ersichtlich ist.

Die Wiegezellen 141,142 und das Display 145 mit einer integrierten Auswertungseinrichtung bilden die Grundkonfiguration einer elektronischen Wiegeeinheit 140.

In Figur 3 ist die Warenablage 200 eingeklappt. Die Schwenkachse 251 hat ihre tiefste mögliche Lage. Die Führungsbahn 242 des vorderen Teilelements 240 zeigt nach unten und bildet mit den als Auflage dienenden Teilen des hinteren Teilelements 250 in der Seitenansicht eine V-förmige Konfiguration.

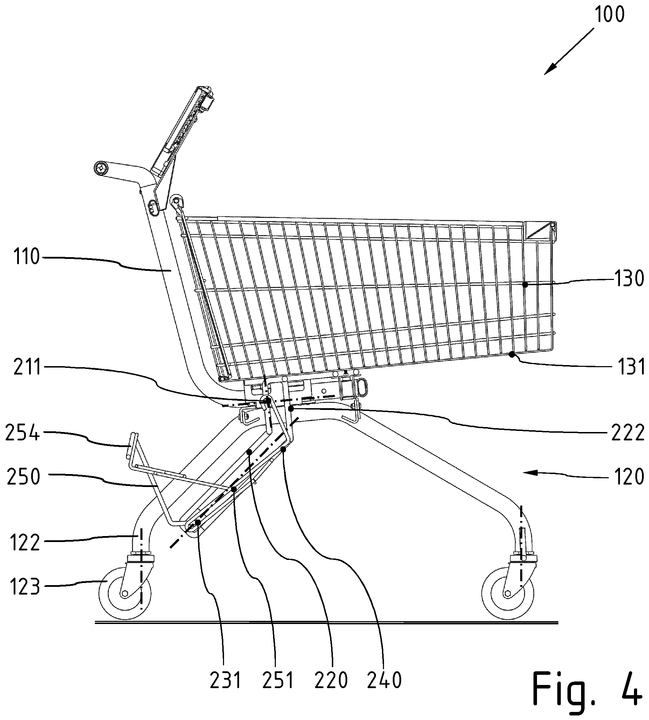

Zum Entfalten der Warenablage 200 wird beispielsweise das hintere Teilelement 250 an einer der Aufkantungen 254 gegriffen. Übt der Benutzer dann eine Zugkraft nach hinten aus, ergibt sich das nächste Stadium der Bewegung der Warenablage 200, das in Figur 4 gezeigt ist. Das hintere Ende des Teilelements 250 befindet sich etwa oberhalb der hinteren Rolle 123. Die gemeinsame Schwenkachse 251 befindet sich zwischen den Tragelementen 220.

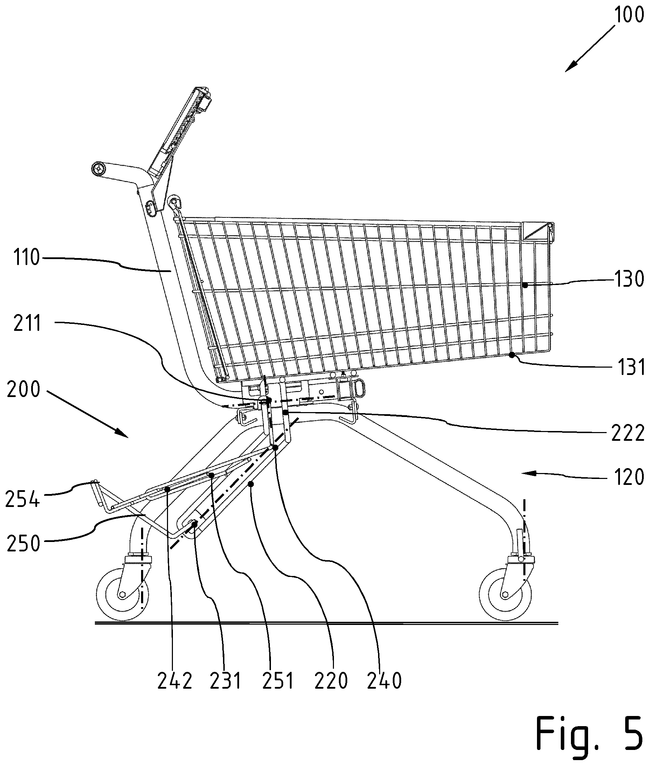

In Figur 5 ist die Warenablage 200 vollständig entfaltet, sodass Teile der beiden Teilelemente 240, 250 eine gemeinsame Auflagefläche an ihrer Oberseite bilden. Die gemeinsame Schwenkachse 251 ist in der Führungsbahn 242 nach vorn gewandert.

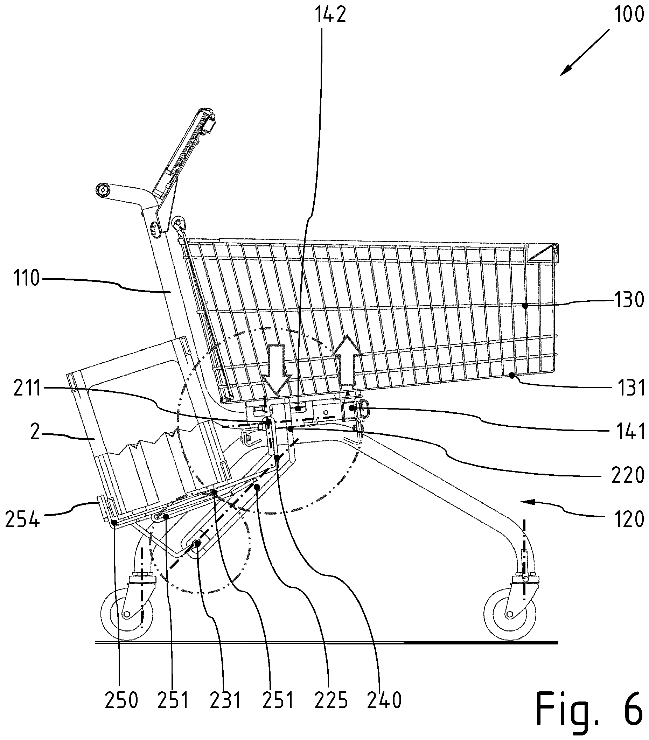

In Figur 6 ist die gleiche Situation von Einkaufswagen und Warenablage 200 wie in Figur 5 dargestellt, jedoch ist eine Getränkekiste 2 auf die Warenablage 200 aufgesetzt. Durch die Masse der Getränkekiste 2 wird über die Teilelemente 240, 250, die obere Schwenkachse 211 und die untere Schwenkachse 231 ein Drehmoment auf die Einkaufsartikelaufnahmeeinheit 130 ausgeübt. Soweit dieses nicht zufällig durch ausreichend schwere Waren kompensiert wird, welche sich im ganz vorderen Abschnitt der Einkaufsartikelaufnahmeeinheit 130 befinden, werden auf die durch die hinteren Wiegezellen 142 gebildeten hinteren Auflagen der Einkaufsartikelaufnahmeeinheit 130 auf dem Fahrgestell 120 Druckkräfte ausgeübt. Zugleich wird die ganz vorne am Scheitel des Fahrgestells 120 angeordnete vordere Wiegezelle 141 auf Zug belastet. Zwar ist jederzeit auch eine umgekehrte Momentenbelastung möglich, wenn sich schwere Waren im vorderen Bereich der Einkaufsartikelaufnahmeeinheit 130 befinden und die Warenablage 200 unbenutzt ist oder nur mit einem leeren Kasten zur Pfandrückgabe bestückt ist. Jedoch müssen die Wiegezellen 141,142 zumindest auch für die in Figur 6 dargestellte Belastungsart geeignet sein.

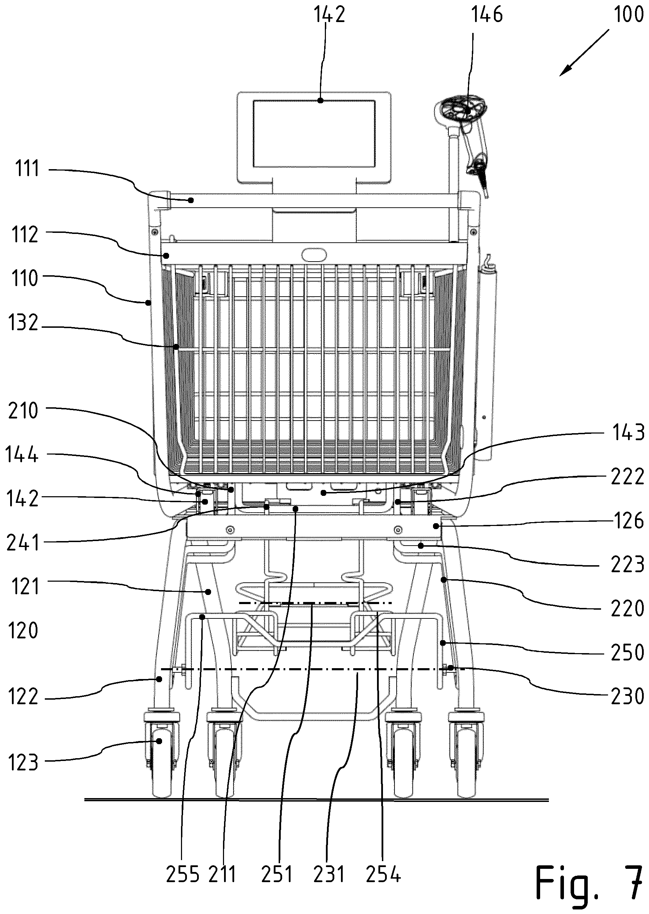

In Figur 7 ist der Einkaufswagen 100 von der Rückseite her gezeigt. Im oberen Bereich ist er wie herkömmliche stapelbare Einkaufswagen mit einem S-Fahrgestell ausgebildet, das heißt, die Einkaufsartikelaufnahmeeinheit 130 läuft mit den nach vorn und nach hinten sowie seitlich abgespreizten Stützen nach vorn schmal zu, sodass von hinten ein Einkaufswagen zwischen die beiden vertikalen Holme des Schiebebügelträgers 110 am vorn stehenden Einkaufswagen eingeschoben werden kann und dabei die Korbklappe 132 hochschwenkt. Dabei wird die Korbklappe 132 über den bereits genannten Schutzbügel 112 geschützt. Ein Anstoß an der hinteren Wiegezelle 142 wird durch den hinteren Schutzbügel 126 vermieden.

Wesentlich für die Stapelbarkeit ist die Breitenaufteilung im Fahrgestell 120 unterhalb des Schutzbügels 126. Die Rollen 123 an den vorderen Stützen 121 stehen enger beieinander als an den hinteren Stützen 122, wie es bei dieser Art von Fahrgestellen üblich ist. Um beim Ineinanderstapeln mehrerer Einkaufswagen 100 das automatische Einklappen der ausgefalteten Warenablage 200 zu erreichen, ist am hinteren Teilelement 250 an beiden Seiten, jeweils zwischen dem Schwenklager 230 und den Aufkantungen 254, ein Gleitstangenabschnitt 255 ausgebildet. Dieser erstreckt sich zumindest genauso weit von innen nach außen, wie auch die vordere Stütze 121 sich von der Mitte aus nach außen erstreckt, sodass beim Stapeln der Gleitstangenabschnitt 255 des vorne stehenden Einkaufswagens auf der Oberkante der vorderen Stütze 121 des hinten stehenden Einkaufswagens abgleitet und dadurch das Einfalten der Warenablage 200 selbsttätig bewirkt.

Wichtig ist weiterhin, dass die Tragelemente 220, die an beiden Seiten vorgesehen sind, um die Schwenklager 230 zu tragen, so nach außen versetzt verlaufen, dass sie beim Stapelvorgang nicht störend wirken. Es hat sich als optimal erwiesen, wenn sich die Tragelemente 220 unmittelbar hinter den hinteren Stützen 122 erstrecken. Die Tragelemente 220 verspringen dann erst in einem oberen Bereich mittels des Horizontalabschnitts 223 nach innen. Die Lage der Horizontalabschnitte 223 ist so gewählt, dass sie beim Stapeln nicht durch die vorderen Stützen 121 eines von hinten eingeschobenen Einkaufswagens 100 angestoßen werden. Insbesondere verlaufen die Horizontalabschnitte 223 unterhalb der hinteren Wiegezellen 142 und gehen dann in den Vertikalabschnitt 222 über, welcher mit dem Basiselement 210 verbunden ist, das wiederum mit dem als Einkaufsartikelaufnahmeeinheit 130 dienenden Drahtkorb verbunden ist.

In der Ansicht von hinten in Figur 7 sind außerdem die U-förmigen Schutzelemente 144 an den beiden hinteren Wiegezellen 142 und ein Schutzelement 143, welches eine vordere Wiegezelle umgibt, sichtbar.

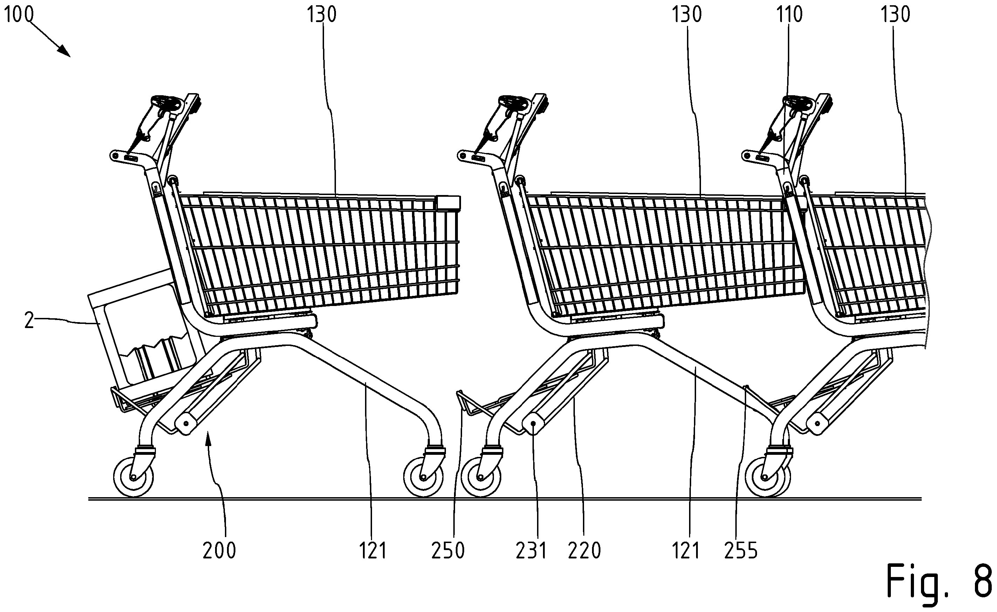

Ein Stapelvorgang mit mehreren erfindungsgemäßen Einkaufswagen 100 mit faltbarer Warenablage 200 wird anhand der in den Figuren 8 bis 10 dargestellten Bewegungsabfolge erläutert.

In Figur 8 ist links ein Einkaufswagen 100 ohne Berührung zu weiteren, in Fahrtrichtung davor angeordneten Einkaufswagen gezeigt. Die Warenablage 200 ist an allen Einkaufswagen entfaltet. Am linken Einkaufswagen befindet sich darauf eine Getränkekiste 2. An dem unmittelbar davor stehenden, in Figur 8 mittleren Einkaufswagen 100 besteht ein erster Kontakt zwischen der Front der Einkaufsartikelaufnahmeeinheit 130 und dem in Figur 8 ganz rechten Einkaufswagen. Der vordere Abschnitt der Einkaufsartikelaufnahmeeinheit 130 des mittleren Einkaufswagen befindet sich bereits innerhalb des Griffbügelträgers 110 des rechten Einkaufswagens. Außerdem besteht ein erster Kontakt des Gleitstangenabschnitts 255 des hinteren Teileelements 250 am ganz rechten Einkaufswagen mit der vorderen Stütze 121 des mittleren Einkaufswagens.

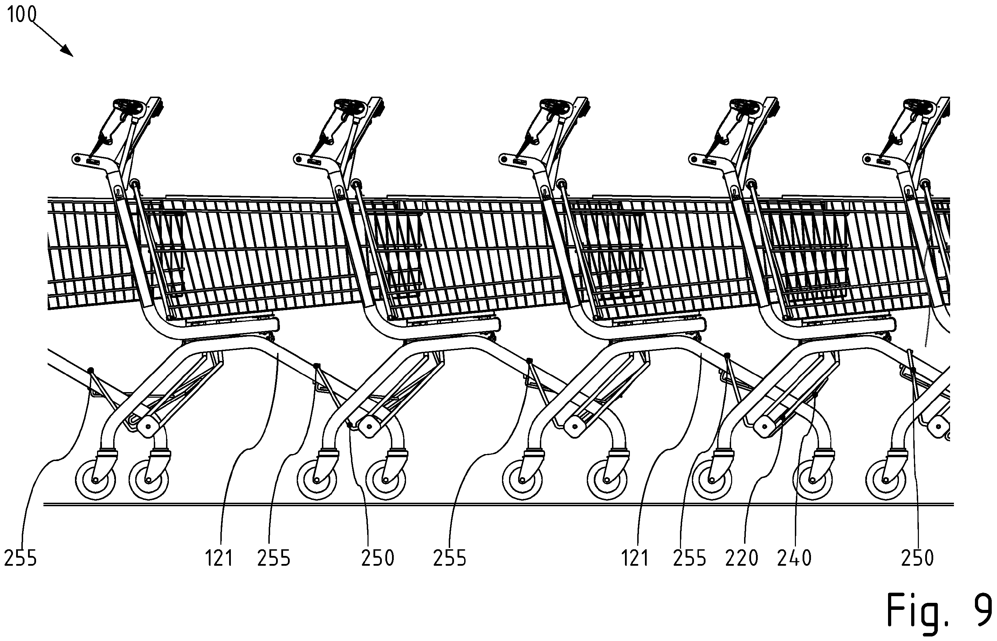

In Figur 9 sind insgesamt sechs Einkaufswagen zumindest teilweise dargestellt, wobei die Stapeltiefe von links nach rechts zunimmt, also das Überdeckungsverhältnis der ineinander geschobenen Drahtkörbe. Hierbei ist insbesondere erkennbar, dass die jeweiligen Gleitstangenabschnitte 255 mit zunehmender Stapeltiefe immer weiter auf der schräg nach vorn ausladenden vorderen Stütze 211 hochgeschoben werden und dabei das hintere Teilelement 250 immer weiter anheben. Das vordere Teilelement 240 ist in dieser Darstellung kaum sichtbar, da es sich hinter den Tragelementen 220 erstreckt.

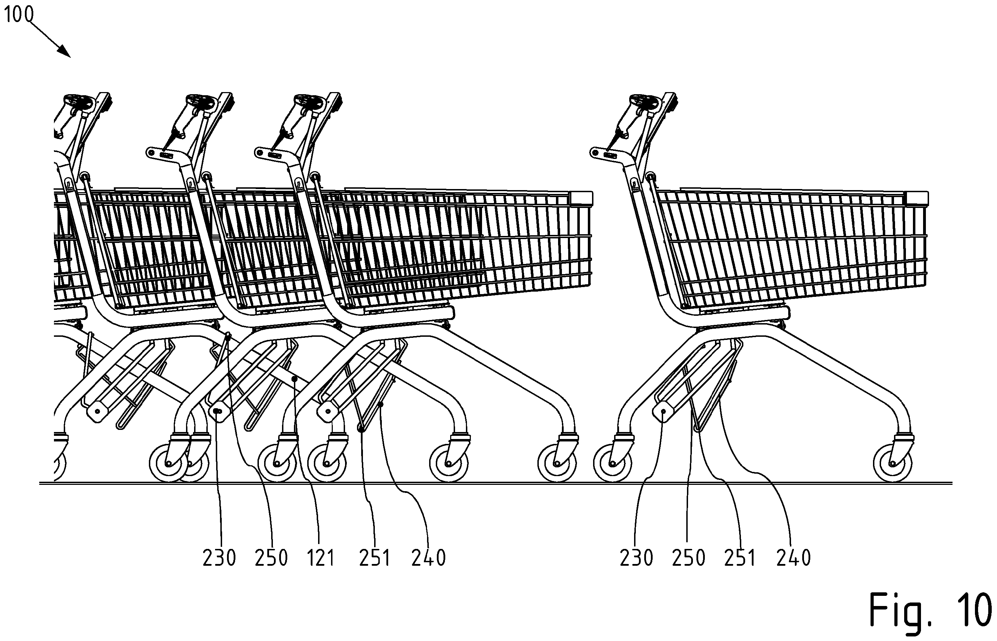

In Figur 10 ist bei den linken drei Einkaufswagen das Ende des Stapelvorgangs erreicht. Der Gleitstangenabschnitt 255 ist auf der vorderen Stütze 121 des benachbarten Einkaufswagens maximal nach oben verschoben worden und hat dabei das um das Schwenklager 230 bewegliche, hintere Teilelement 250 angehoben. Das vordere Teilelement 240 hat sich immer weiter abgesenkt, bis es in seine unterste Position gelangt ist und sich auch die gemeinsame Schwenkachse 251, über die die Teilelemente 240, 250 gekoppelt sind, in der untersten Position befindet.

Wird vom vorderen Ende des Stapels ein Einkaufswagen 100 entnommen, so bleibt bei diesem die Warenablage 200 vollständig eingefaltet, wie bei dem in Figur 10 ganz rechts dargestellten Einkaufswagen gezeigt.

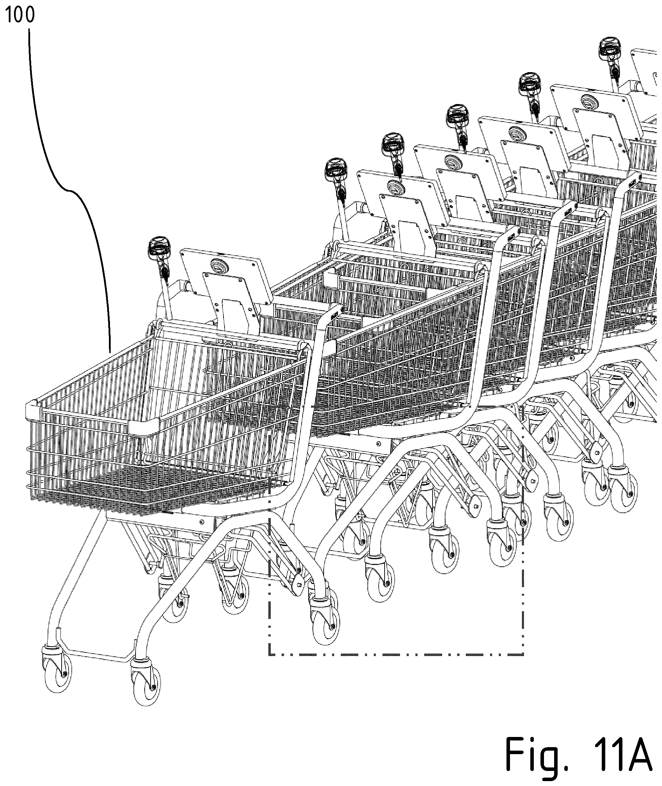

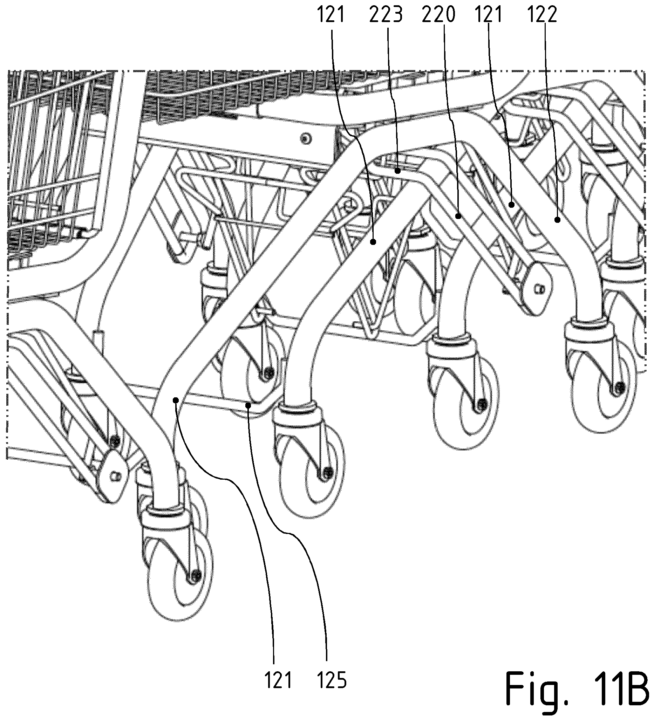

In Figur 11A zeigt den Stapel mehrerer Einkaufswagen 100 aus Figur 10 in perspektivischer Ansicht von schräg vorn. Der dort markierte Bereich ist in Figur 11B vergrößert dargestellt, um zwei Details herauszustellen:
- Das Tragelement 220 verläuft zunächst über seinen Horizontalabschnitt 223 aus dem mittleren Bereich des Einkaufswagens seitlich nach außen und setzt sich außerhalb des Fahrgestells fort; es überdeckt im Stapel zugleich die jeweiligen vorderen Stützen 121 von zwei benachbarten Einkaufswagen, ohne diese zu berühren. Das Tragelement 220 berührt im Stapel auch keine hintere Stütze 122.
- Der Querbügel 125, der zur Aussteifung dient, ist so geformt und angeordnet, dass er beim Stapeln das untere Ende der Führungsbahn 242 und die gemeinsame Schwenkachse 251 auch dann nicht berührt, wenn diese sich in der tiefsten Stellung befinden, welche jeweils in Figur 3 und Fig. 10 gezeigt ist.

### Bezugszeichenliste

- 1: Aufstandsebene
- 2: Getränkekiste

- **100**: **Einkaufswagen**

- 110: Griffbügelträger
- 111: Griffbügel
- 112: Schutzbügel

- 120: Fahrgestell
- 121: vordere Stützen
- 122: hintere Stützen
- 123: Rollen
- 124: Scheitel
- 125: Querbügel
- 126: Schutzbügel

- 130: Einkaufsartikelaufnahmeeinheit
- 131: Bodenbereich
- 132: Korbklappe

- 140: Wiegeeinheit
- 141: Wiegezelle
- 142: Wiegezelle
- 143, 144: Schutzelemente
- 145: Display
- 146: Handscanner

- **200**: **faltbare Warenablage**

- 210: Basiseinheit
- 211: obere, vordere Schwenkachse

- 220: Tragelemente
- 222: Vertikalabschnitt
- 223: Horizontalabschnitt
- 224,225: Teilabschnitte

- 230: Schwenklager
- 231: hintere, untere Schwenkachse

- 240: vorderes Teilelement
- 241: Haken
- 242: Führungsbahn
- 243: Drahtschlaufen

- 250: Teilelement
- 251: mittlere Schwenkachse
- 252: Bügelfortsätze
- 254: Aufkantung
- 255: Gleitstangenabschnitt
- 256: Bucht

## Patentansprüche

1. Stapelbarer Einkaufswagen (100) mit einer Wiegeeinheit (140), wenigstens umfassend
- ein Fahrgestell (120), das zwei Paare von nach vorn und/oder nach hinten abgespreizten und jeweils mit wenigstens einer Rolle (123) versehenen Stützen (121, 122) umfasst, die sich paarweise an einem oberen Scheitel (124) vereinigen,
- die Wiegeeinheit (140), die zumindest eine elektronischen Auswertungseinrichtung und wenigstens zwei Wiegezellen (141, 142) umfasst;
- eine Einkaufsartikelaufnahmeeinheit (130), die über die darunter angeordneten Wiegezellen (141, 142) auf dem Fahrgestell (120) gelagert ist,
**dadurch gekennzeichnet, dass** am Heck des Einkaufswagens eine faltbare Warenablage (200) vorgesehen ist, die nur an der Einkaufsartikelaufnahmeeinheit (130) hängt, ohne das Fahrgestell (120) zu berühren.

2. Einkaufswagen (100) nach Anspruch 1, **dadurch gekennzeichnet, dass** an der Einkaufsartikelaufnahmeeinheit (130) beidseitig Tragelemente (220) vorgesehen sind, die sich von der Einkaufsartikelaufnahmeeinheit (130) aus nach unten erstrecken, und dass an den Tragelementen (220) je ein Schwenklager (230) für die Warenablage (200) ausgebildet ist.

3. Einkaufswagen (100) nach Anspruch 1 oder 2, **dadurch gekennzeichnet, dass** die Warenablage (200) wenigstens zwei an einer gemeinsamen Schwenkachse (251) gelenkig miteinander verbundene Teilelemente (240, 250) umfasst, wobei beide Teilelemente (240, 250) jeweils über je eine weitere Schwenkachse (211, 241) an der Einkaufsartikelaufnahmeeinheit (130) beweglich gelagert sind und wobei eine obere Schwenkachse (211) in Fahrtrichtung des Fahrgestells (120) weiter vorn liegt als eine untere Schwenkachse (231).

4. Einkaufswagen (100) nach Anspruch 3, **dadurch gekennzeichnet,**
- **dass** das vordere Teilelement (240) an der oberen, vorderen Schwenkachse (211) gelenkig gelagert ist, die im Bodenbereich (131) der Einkaufsartikelaufnahmeeinheit (130) angeordnet ist;
- **dass** an den Tragelementen (220) je ein Schwenklager (230) für die untere, hintere Schwenkachse (231) ausgebildet ist, an der das zweite Teilelement (240) gelenkig gelagert ist.

5. Einkaufswagen (100) nach Anspruch 3 oder 4, **dadurch gekennzeichnet,**
- **dass** das vordere Teilelement (240) wenigstens zwei zueinander beabstandete Haken (241) aufweist und
- **dass** eine Basiseinheit (210) mit dem Bodenbereich (131) der Einkaufsartikelaufnahmeeinheit (130) verbunden ist, die einen vom Bodenbereich (131) beabstandeten, horizontal ausgerichteten Drahtbügel aufweist, der die obere Schwenkachse (211) bildet und an dem die Haken (241) des vorderen Teilelements (240) eingehängt sind.

6. Einkaufswagen (100) nach einem der Ansprüche 2 bis 5, **dadurch gekennzeichnet, dass** die Tragelemente (220) mit dem Bodenbereich (131) der Einkaufsartikelaufnahmeeinheit (130) verbunden sind und sich von dort aus in einem Vertikalabschnitt (222) bis unterhalb der hinteren Wiegezellen (142) und in einem Horizontalabschnitt (223) seitlich bis auf Höhe der hinteren Stützen (122) nach außen und von dort schräg nach unten zu den Schwenklagern (230) erstrecken.

7. Einkaufswagen (100) nach Anspruch 5 und 6, **dadurch gekennzeichnet, dass** der Vertikalabschnitt (222) mit der Basiseinheit (210) verbunden ist.

8. Einkaufswagen (100) nach einem der Ansprüche 2 bis 7, **dadurch gekennzeichnet, dass** die Tragelemente (220) jeweils zumindest in einem zu den Schwenklagern (230) führenden Endabschnitt als Doppel-Drahtbügel mit zwei beabstandet parallel zueinander verlaufenden Teilabschnitten (224, 225) ausgebildet sind, welche sich an den Schwenklagern (230) vereinigen.

9. Einkaufswagen (100) nach einem der vorhergehenden Ansprüche, **dadurch gekennzeichnet, dass** die Endabschnitte der Tragelemente (220) im Grundriss des Einkaufswagens (100) gesehen jeweils unterhalb der hinteren Stützen (122) des Fahrgestells (120) verlaufen.

10. Einkaufswagen (100) nach einem der vorhergehenden Ansprüche, **dadurch gekennzeichnet, dass** sich die Endabschnitte der Tragelemente (220) parallel zu den hinteren Stützen (122) des Fahrgestells (120) erstrecken.

11. Einkaufswagen (100) nach einem der vorhergehenden Ansprüche, **dadurch gekennzeichnet, dass** die Einkaufsartikelaufnahmeeinheit (130) über wenigstens je eine auf Druck belastbare Wiegezelle (142) in einem rückwärtigen Bereich der Einkaufsartikelaufnahmeeinheit (130) und wenigstens eine auf Zug belastbare Wiegezelle (141) in einem vorderen Bereich der Einkaufsartikelaufnahmeeinheit (130) auf dem Fahrgestell (120) gelagert ist.

12. Einkaufswagen (100) nach wenigstens einem der vorhergehenden Ansprüche, **dadurch gekennzeichnet, dass** drei Wiegezellen (141, 142) vorgesehen sind, von denen je eine Wiegezellen (141, 142) seitlich auf beiden Seiten des Fahrgestells (120) und eine vordere Wiegezelle (141, 142) quer zwischen den beiden Seiten angeordnet ist.

13. Einkaufswagen (100) nach wenigstens einem der vorhergehenden Ansprüche, **dadurch gekennzeichnet, dass** je Wiegezelle (141, 142) wenigstens ein Schutzelement (143, 144) vorgesehen ist, das die Gehäuse der Wiegezellen (141, 142) wenigstens teilweise umgibt.

14. Einkaufswagen (100) nach einem der vorhergehenden Ansprüche, **dadurch gekennzeichnet, dass** das vordere Teilelement (240) der Warenablage (200) zwei vertikal angestellte und parallel zueinander ausgerichtete, U-förmige Drahtschlaufen (243) aufweist, die jeweils eine Führungsbahn (242) ausbilden, in welchem das hintere Teilelement (250) über zwei abgewinkelte Bügelfortsätze (252), die auf der gemeinsamen Schwenkachse (251) liegen, beweglich geführt ist.
